# EUROPEAN PATENT APPLICATION

(11) **EP 2 204 580 A2**
(43) Date of publication of application: **07.07.2010**
(21) Application number: 09178630.1
(22) Date of filing: 10.12.2009
(51) Int. Cl.: F03D 9/00

(54) **Wind turbine starting**

(30) Priority: 31.12.2008 US 347288
(71) Applicant: General Electric Company, Schenectady, NY 12345 (US)
(72) Inventor: Kirchner, Andreas, 49134, Wallenhorst (DE); Barton, Werner, 48712, Gescher (DE)
(74) Representative: Bedford, Grant Richard

(57) **Abstract**

A method of providing power from a wind generator includes sending a request (306) to supply power to an operator of a power distribution network; receiving an authorization (310) to supply power from the power distribution network operator; and connecting the wind generator to the power distribution network in response to the authorization to supply power.

## Description

The subject matter described here generally relates to wind turbines, and, more particularly, to a method and apparatus for quickly restarting wind turbines.

A wind turbine is a machine for converting the kinetic energy in wind into mechanical energy. If the mechanical energy is used directly by the machinery, such as to pump water or to grind wheat, then the wind turbine may be referred to as a "windmill." Similarly, if the mechanical energy is converted to electricity, then the machine may also be referred to as a "wind generator" or "wind power plant."

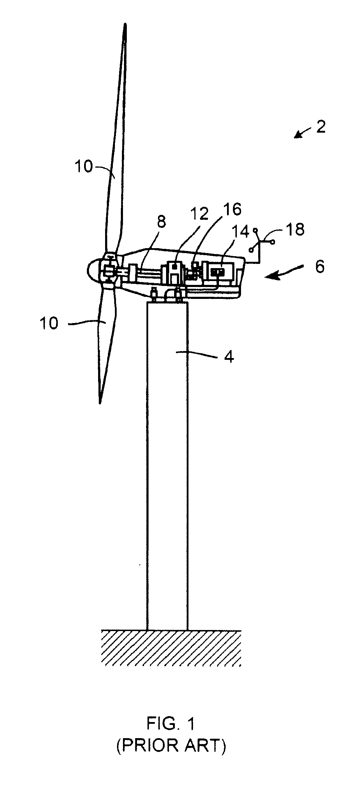

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a "spinner" or hub 9 to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that typically includes a programmable logic controller and may receive input from an anemometer 18.

The blades 10 generate lift and capture momentum from moving air that is them imparted to the rotor 9. Each blade 10 is typically secured to the hub 9 at its "root" end, and then "spans" radially "outboard" to a free, "tip" end. The front, or "leading edge," of the blade 10 connects the forward-most points of the blade that first contact the air. The rear, or "trailing edge," of the blade 10 is where airflow that has been separated by the leading edge rejoins after passing over the suction and pressure surfaces of the blade. A "chord line" connects the leading and trailing edges of the blade 10 in the direction of the typical airflow across the blade and roughly defines the plane of the blade.

"Angle of attack" is a term that is used in to describe the angle between the chord line of the blade 10 and the vector representing the relative motion between the blade and the air. "Pitching" refers to rotating the angle of attack of the entire blade 10 into or out of the wind in order to control the rotational speed and/or absorption of power from the wind. For example, pitching the blade "towards feather" rotates of the leading edge of the blade 10 into the wind, while pitching the blades "towards stall" rotates the leading edge of the blade out of the wind.

For so-called "pitch controlled" wind turbines, the pitch may be adjusted each time the wind changes in order to maintain the rotor blades at the optimum angle and maximize power output for all wind speeds. For example, the control system 16 may check the power output of the turbine 2 several times per second. When the power output becomes too high, the control system 16 then sends a signal to the blade pitch mechanism which causes the blades 10 to be pitched slightly (or entirely) out of the wind. The blades 10 are then turned back into the wind when the wind speed slows down.

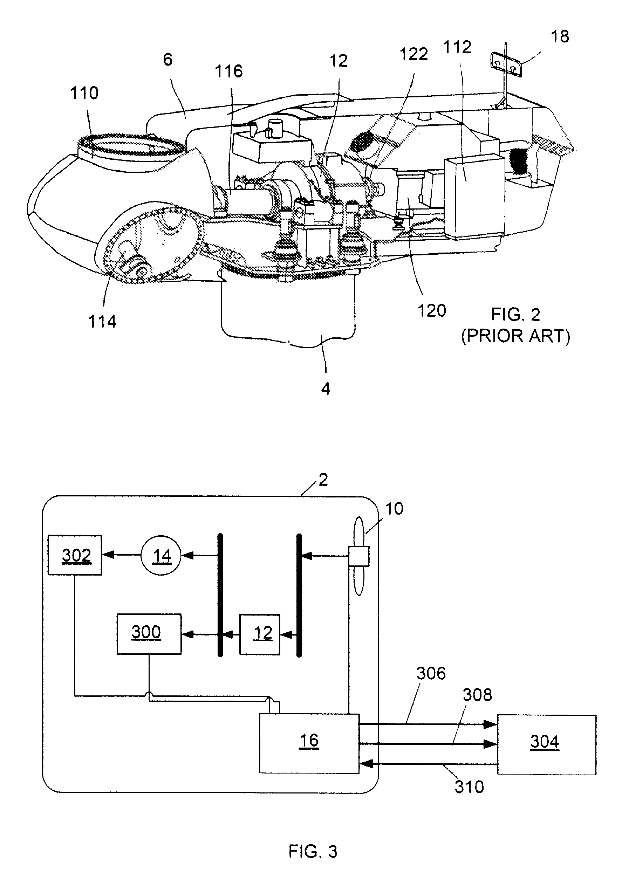

Commonly-assigned U.S. Patent No. 7,126,236 discloses "Methods and Apparatus for Pitch Control Power Conversion" and is reproduced in FIG. 2 where the control system 16 (from FIG. 1) includes one or more controllers within a control panel 112 for overall system monitoring and control including pitch and speed regulation, highspeed shaft and yaw brake application, yaw and pump motor application and fault monitoring. However, alternative distributed or centralized control architectures are also used in some configurations.

The control system 16 provides control signals to the variable blade pitch drive or actuator 114 to control the pitch of blades 10 (FIG. 1) that drive hub 110. The drive train 8 (FIG. 1) of the wind turbine 2 includes a main rotor shaft 116 (also referred to as a "low speed shaft") connected to hub 110 and a gear box 12 that, in some configurations, utilizes a dual path geometry to drive a high speed shaft enclosed within gear box. A high speed shaft from the opposite end of the gear box is used to drive a first generator 120. In some configurations, torque is transmitted via the coupling 122.

The electricity generated by one or more of these wind turbines 2 in a wind park or "wind farm" is normally fed into an electric power transmission network that is typically operated by a utility company. Different types of wind turbine generators behave differently during transmission grid disturbances, including restarting of the turbines. Transmission system operators will therefore require a wind farm developer to follow a "grid code" that specifies the requirements for interconnection to the transmission grid. The grid code will typically specify a variety of operating parameter tolerances in areas such as power factor, frequency, voltage and current, and the requirements for parameters during various transmission events such as low voltage ride through.

Various power quality issues arise when a wind generator is connected or reconnected to a power distribution network. For example, the generator 14 may be initially operated as a motor in order to bring the rotor up to the appropriate speed. During that time an in-rush current to the generator 14 may cause a voltage dip on the power distribution network. Even after the generator 14 is motoring at the appropriate speed, voltage, current, real and reactive power, and/or frequency variations may occur in the distribution networks when the turbine 2 is connected (or "cut in") to the network as a generator and/or operated at less than full speed.

For this reason, a typical procedure for staring a wind turbine 2 may involve starting with the blades at an initial "feather" position of about 85 degrees with the generator rotating at less than 60 rpm. The blades are then pitched to a "spin up" position of about 65 degrees for at least 60 seconds until the generator reaches about 350 rpm. Around that speed, the blades are pitched to a "run up" position of about 4 degrees for about another 60 seconds until the generator reaches a speed of about 1000 rpm. At that speed the generator has reached a "cut in" state and is connected to the network and the controller 16 is allowed to control the blade pitch for efficient power production. In about 25 seconds the generator will then reach a "load" state and attain its normal operating speed of 1440 rpm. In order to maintain the grid code requirements, such startup procedures can require the wind turbine 2 to be unproductive for three minutes or more each time the turbine is reconnected to the grid.

Various drawbacks associated with such conventional approaches are addressed here in by providing, in various embodiments, a method of providing power from a wind generator, including sending a request to supply power to an operator of a power distribution network; receiving an authorization to supply power from the power distribution network operator; and connecting the wind generator to the power distribution network in response to the authorization to supply power.

Various aspects of this technology will now be described with reference to the following figures ("FIGs.") which are not necessarily drawn to scale, but use the same reference numerals to designate corresponding parts throughout each of the several views.

FIG. 1 is a schematic side view of a conventional wind generator.

FIG. 2 is a cut-away orthographic view of the nacelle and hub of the conventional wind generator shown in FIG. 1.

FIG. 3 is a schematic view of the a wind generator connected to a power distribution network.

FIG. 4 is a schematic view of a wind generator farm connected to a power distribution network..

FIG. 5 is a schematic flow diagram.

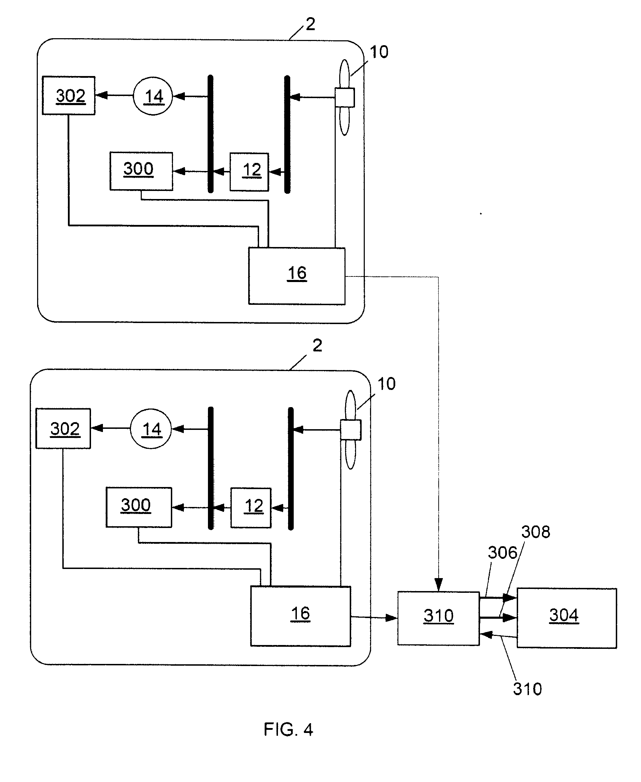

In FIGs. 3 and 4, each of the illustrated wind turbines 2 includes blades 10 for rotating a gearbox 12 and a generator 14. A control system 16 sends and receives control signals from a brake 300 and a central control unit 302 for the generator 14. For example, the central control unit 302 may help to regulate the voltage on the bus (nor shown), manages and control excitation to the generator, and work in conjunction with the control system 16 for adjusting pitch of the blades 10.

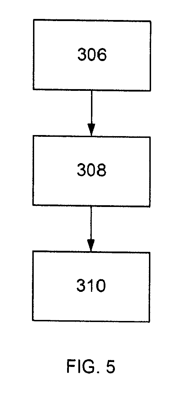

Power is provided from one or more wind turbines or wind generators 2 by sending a sending a request 306 to supply power to an operator 304 of a power distribution network. The request may be sent automatically by the wind turbine control system 16, by a wind farm controller 312 for multiple wind turbines (shown in FIG. 5), and/or via an intermediary such as a wind turbine operator and/or electrical power broker, system administrator, or regulator. The request may also be initiated from an operator 304 of a power distribution network that needs power from the wind turbine 2.

For example, the request 306 will indicate and/or warn the operator 304 that grid fluctuations are likely to occur when the wind turbine 2 is connected to the power distribution network and/or otherwise brought on-line. In this regard, the request 306 may include at least one capacity parameter for the wind generator, such as, but not limited to, a real and/or reactive power production capacity like kilowatts or kilovolt amperes. Alternatively, or in addition, the request 306 may include one or more parameters indicating the current operational status of the wind turbine 2, such as arriving at a cut in or load state. For example, status parameters may indicate that the generator 14 is ready to be connected to the power distribution network such as, but not limited to, that it is operating at a minimum or other predetermined speed, power, frequency, phase angle, voltage, current, and/or other condition.

Multiple and/or consecutive requests 306 may also be sent to, and received by, the operator 304 of the power distribution network with repeated information, updated information, historical information, and/or predicted information regarding the capacity, status, and/or other information concerning the wind turbine 2. For example, as illustrated in FIG. 5 a first request 306 to supply power may be sent to an operator 304 (FIGs. 3 and 4 ) of a power distribution network with at least one capacity parameter for the wind generator. A second request 308 to supply power may also be sent to the operator 304 of the power distribution network with at least one status parameter for the wind generator, such as arriving at a cut in or load state. For example, the second request 308 may be sent when the generator 14 has achieved a predetermined status such as a predetermined speed. power, frequency, phase angle, voltage, current, and/or other condition. In this way, the operator 304 may be informed that the wind turbine 2 in a condition that will allow it connect to the power distribution network very soon.

When any of the requests 306 and 308 are sent by the wind turbine 2, and/or received by the operator 304, the operator of the power distribution network may send, and the wind turbine 2 may receive, an authorization 310 to supply power from the power distribution network operator. The authorization 310 may be sent automatically by the power distribution network and/or via an intermediary such as a network operator and/or electrical power broker, system administrator, or regulator. For example, the authorization 310 may include an immediate or future time to connect to the power distribution network. Information concerning how to connect to the power distribution network, such as current grid code requirements, may also be included in the authorization. Multiple and/or consecutive authorizations 310 may also be sent to, and received by, the wind turbine 2 of the power distribution network with repeated information, updated information, historical information, and/or predicted information regarding the capacity, status, grid code and/or other information concerning the power distribution network. In this way, the wind turbine 2 and/or its operator may be informed that the wind turbine can supply power without upsetting the power distribution network.

Various embodiments of the technology described above can be implemented in hardware, software, firmware, or a combination thereof. For example, any such software or firmware may be stored in a memory and that is executed by a suitable instruction execution system. If implemented in hardware, various technologies may be used, including discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc. Any suitable medium and/or technologies may also be used to communicate the requests 306 and 308, and authorizations 310, including wired and/or wireless systems such as telegraphic, telephonic, radio, optical, Internet and other computer networks, and powerline communication systems.

The flow chart of FIG. 5 discussed above, shows the general functionality and operation of a possible implementations of the system. In this regard, each block represents a module, segment, or portion of code, which may include one or more executable instructions for implementing the specified logical function(s) with various types of hardware. It should also be noted that in some alternative implementations, the functions noted in the blocks may occur out of the order noted in FIG. 5. For example, two blocks shown in succession in FIG. 5 may in fact be executed substantially concurrently, some blocks may be omitted, or the blocks may sometimes be executed in different order.

The technology described above offers various advantages over conventional approaches. For example, the wind turbine 2 may be brought up to "cut in" speed with stored energy, and/or energy from the power distribution network, before (or after) an authorization 310 is received. The wind turbine 2 may therefore be connected to the power distribution network more quickly and sooner to when it is actually needed. If the power distribution network is not capable of accepting power from the wind turbine 2, then the turbine does not need to be spun up and/or run up to the appropriate speed for cut in connection to the network before power is needed. Consequently, available wind power supplies are more likely to match power demand. Upsets to the power distribution network may also be minimized or avoided with appropriate warning to and/or authorization from the network operator.

Any process descriptions or blocks in flow charts should be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

It should also be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are defined by the following numbered clauses:
1. A method of providing power from a wind generator, comprising:
   sending a request for authorization to supply power to a power distribution network;
   receiving an authorization to supply power from the power distribution network operator; and
   connecting the wind generator to the power distribution network in response to the authorization from the power distribution network.
2. The method recited in clause 1, wherein the request includes at least one capacity parameter for the wind generator.
3. The method recited in any preceding clause, wherein the at least one capacity parameter for the wind turbine includes a power production capacity of the wind generator.
4. The method recited in any preceding clause, wherein the power production capacity comprises a real power production capacity of the wind generator.
5. The method recited in any preceding clause, wherein the power production capacity comprises a reactive power production capacity of the wind generator.
6. The method recited in any preceding clause, wherein the power production capacity comprises a real power production capacity of the wind generator.
7. The method recited in any preceding clause, wherein the request includes at least one status parameter for the wind generator.
8. The method recited in any preceding clause, wherein sending step is performed when the wind generator has achieved a predetermined operational status.
9. The method recited in any preceding clause, wherein request sending step is performed when the wind has achieved a predetermined operational status.
10. A method of providing power from a wind generator, comprising:
   sending a first request for authorization to supply power to an operator of a power distribution network with at least one capacity parameter for the wind generator;
   sending a second request for authorization to supply power the operator of the power distribution network with at least one status parameter for the wind generator; and
   receiving an authorization to supply power from the operator of the power distribution network; and
   connecting the wind generator to the power distribution network in response to the authorization to supply power.
11. The method recited in any preceding clause, wherein the second request is sent when the wind generator has achieved a predetermined operational status.
12. The method recited in any preceding clause, wherein the capacity parameter is selected from the group consisting of a real power capacity of the wind generator and a reactive power capacity of the wind generator.
13. The method recited in any preceding clause, wherein the capacity parameter is selected from the group consisting of a real power capacity of the wind generator and a reactive power capacity of the wind generator.
14. The method recited in any preceding clause, wherein the status parameter is selected from the group consisting of speed, power, frequency, phase angle, voltage, current.
15. The method recited in any preceding clause, wherein the status parameter is selected from the group consisting of speed, power, frequency, phase angle, voltage, current.
16. A method of providing power from a wind generator, comprising:
   receiving a request for authorization to supply power from an operator of a wind generator;
   sending an authorization to supply power to the operator of the wind generator in response to the request; and
   receiving power from the wind generator in response to the authorization.
17. The method recited in any preceding clause, wherein the request comprises information selected from the group consisting a capacity and a status of the wind generator.
18. The method recited in any preceding clause, wherein the request comprises information selected from the group consisting of speed, power, frequency, phase angle, voltage, current of the wind generator.
19. The method recited in any preceding clause, wherein the request comprises information selected from the group consisting of speed, power, frequency, phase angle, voltage, current of the wind generator.
20. The method recited in any preceding clause, wherein the request is received when the wind generator has achieved a predetermined operational status.

## Claims

1. A method of providing power from a wind generator, comprising:
sending a request for authorization (306) to supply power to a power distribution network;
receiving an authorization (310) to supply power from the power distribution network operator; and
connecting the wind generator to the power distribution network in response to the authorization (310) from the power distribution network.

2. The method recited in claim 1, wherein the request includes at least one capacity parameter for the wind generator.

3. The method recited in claim 2, wherein the at least one capacity parameter for the wind turbine includes a power production capacity of the wind generator.

4. The method recited in claim 3, wherein the power production capacity comprises a real power production capacity of the wind generator.

5. The method recited in claim 3 or 4, wherein the power production capacity comprises a reactive power production capacity of the wind generator.

6. The method recited in claim 3, 4, or 5, wherein the power production capacity comprises a real power production capacity of the wind generator.

7. The method recited in any of claims 1-6, wherein the request (306) includes at least one status parameter for the wind generator.

8. The method recited in any of claims 1-7, wherein sending step is performed when the wind generator has achieved a predetermined operational status.

9. The method recited in any of claims 1-8, wherein request sending step is performed when the wind has achieved a predetermined operational status.

10. A method of providing power from a wind generator, comprising:
sending a first request for authorization (306) to supply power to an operator of a power distribution network with at least one capacity parameter for the wind generator;
sending a second request for authorization (308) to supply power the operator of the power distribution network with at least one status parameter for the wind generator; and
receiving an authorization to supply power (210) from the operator of the power distribution network; and
connecting the wind generator to the power distribution network in response to the authorization to supply power.

11. The method recited in claim 10, wherein the second request is sent when the wind generator has achieved a predetermined operational status.

12. The method recited in claims 10 or 11, wherein the capacity parameter is selected from the group consisting of a real power capacity of the wind generator and a reactive power capacity of the wind generator.

13. The method recited in claim 10, 11, or 12, wherein the capacity parameter is selected from the group consisting of a real power capacity of the wind generator and a reactive power capacity of the wind generator.

14. The method recited in claims 10, 11, 12, or 13 wherein the status parameter is selected from the group consisting of speed, power, frequency, phase angle, voltage, current.

15. A method of providing power from a wind generator, comprising:
receiving a request for authorization (310) to supply power from an operator of a wind generator;
sending an authorization (306) to supply power to the operator of the wind generator in response to the request; and
receiving power from the wind generator in response to the authorization.
